# EUROPÄISCHE PATENTSCHRIFT

(11) **EP 3 630 566 B1**
(45) Veröffentlichungstag und Bekanntmachung des Hinweises auf die Patenterteilung: **12.05.2021**
(21) Anmeldenummer: 18715545.2
(22) Anmeldetag: 22.03.2018
(51) Int. Cl.: B60T 13/74, B60T 7/04

(54) **STEUERVORRICHTUNG UND VERFAHREN ZUM BETREIBEN EINES ELEKTROMECHANISCHEN BREMSKRAFTVERSTÄRKERS EINES FAHRZEUGS**
CONTROL DEVICE AND METHOD FOR OPERATING AN ELECTROMECHANICAL BRAKE BOOSTER OF A VEHICLE
DISPOSITIF DE COMMANDE ET PROCÉDÉ PERMETTANT DE FAIRE FONCTIONNER UN SERVOFREIN ÉLECTROMÉCANIQUE D'UN VÉHICULE

(30) Priorität: 23.05.2017 DE 102017208685
(43) Veröffentlichungstag der Anmeldung: 08.04.2020
(73) Patentinhaber: Robert Bosch GmbH, 70442 Stuttgart (DE)
(72) Erfinder: GONZALEZ ROMERO, Rafael, 74360 Ilsfeld-Auenstein (DE); SCHMIEG, Benno, 70839 Gerlingen (DE); ZIPPRICH, Dominic, 71717 Beilstein (DE)
(86) Internationale Anmeldenummer: PCT/EP2018/057306
(87) Internationale Veröffentlichungsnummer: WO 2018/215118

(56) Entgegenhaltungen:
- EP-A1- 2 778 000
- DE-A1-102006 020 303
- DE-A1-102012 203 698
- DE-A1-102015 219 303

## Beschreibung

Die Erfindung betrifft eine Steuervorrichtung für einen elektromechanischen Bremskraftverstärker eines Fahrzeugs. Ebenso betrifft die Erfindung einen elektromechanischen Bremskraftverstärker für ein Fahrzeug und ein hydraulisches Bremssystem für ein Fahrzeug. Des Weiteren betrifft die Erfindung ein Verfahren zum Betreiben eines elektromechanischen Bremskraftverstärkers eines Fahrzeugs.

### Stand der Technik

Aus dem Stand der Technik sind Schwimm-Bremssattel mit einem Radbremszylinder bekannt, welche im Weiteren als Schwimm-Bremssattel-Radbremszylinder bezeichnet werden. Bei einem Schwimm-Bremssattel-Radbremszylinder ist mindestens ein Bremsklotz in seiner unbetätigten Stellung nie ganz zurück in den zugeordneten Schwimm-Bremssattel gedrückt und erzeugt somit (selbst während einer ungebremsten Fahrt eines damit ausgestatteten Fahrzeugs/Kraftfahrzeugs) noch ein Rest-Schleifmoment (bzw. ein Rest-Bremsmoment) auf eine zugeordnete rotierende Bremsscheibe. Da das Rest-Schleifmoment einem Antriebsmoment des ungebremst fahrenden Fahrzeugs/Kraftfahrzeugs entgegengerichtet ist, trägt es zur Steigerung eines Kraftstoffverbrauchs (und eventuell einer Schadstoffemission) selbst beim Einhalten einer konstanten Geschwindigkeit des Fahrzeugs/Kraftfahrzeugs bei.

Bekannt sind aus dem Stand der Technik auch widerstandsreduzierte Bremssattel oder Low-Drag-Bremssattel (Low Drag Caliper) mit einem Radbremszylinder, welche im Weiteren als Low-Drag-Radbremszylinder bezeichnet werden. Bei einem Low-Drag-Radbremszylinder weist der mindestens eine Bremsklotz in seiner unbetätigten Stellung (im Vergleich mit einem Schwimm-Bremssattel-Radbremszylinder) einen größeren Lüftspalt (ein sogenanntes "Lüftspiel") zu der zugeordneten rotierenden Bremsscheibe auf. Dadurch minimiert sich das Rest-Schleifmoment (bzw. das Rest-Bremsmoment) des Low-Drag-Radbremszylinders und damit auch ein Energieverbrauch/Kraftstoffverbrauch (und evtl. eine Schadstoffemission) in unbetätigter Stellung.

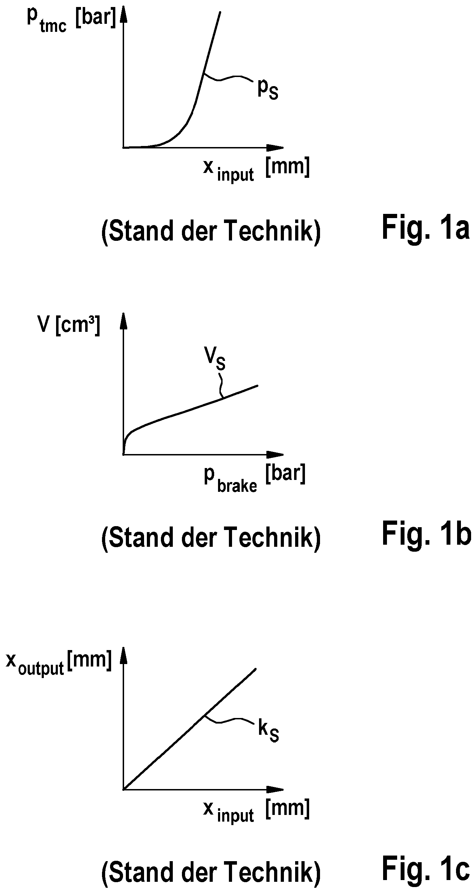

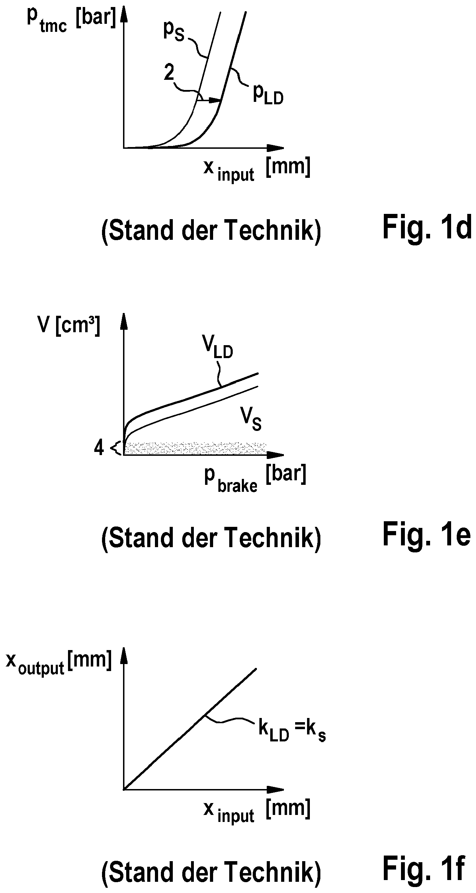

Fig. 1a bis 1f zeigen Koordinatensysteme zum Erläutern von Ansprechzeiten herkömmlicher Radbremszylinder, wobei mittels der Koordinatensysteme der Fig. 1a bis 1c ein standardgemäßer Schwimm-Bremssattel-Radbremszylinder und mittels der Koordinatensysteme der Fig. 1d bis 1f ein standardgemäßer Low-Drag-Radbremszylinder wiedergegeben sind. Bei den Koordinatensystemen der Fig. 1a und 1d zeigen die Abszissen einen Eingangsstangenweg xᵢₙₚᵤₜ (in Millimeter) einer Eingangsstange eines mit dem jeweiligen Radbremszylinder zusammenwirkenden hydraulischen Bremssystems, während die Ordinaten der Koordinatensysteme der Fig. 1a und 1d einen Hauptbremszylinderdruck t_{tmc} (in Bar) in einem Hauptbremszylinder des jeweiligen hydraulischen Bremssystems wiedergeben. Die Abszissen der Koordinatensysteme der Fig. 1b und 1e geben einen in den jeweiligen Radbremszylindern des jeweiligen hydraulischen Bremssystems vorliegenden Bremsdruck p_{brake} (in Bar) an, wobei das dazu aus dem zugeordneten Hauptbremszylinder in die Radbremszylinder zu verschiebende Bremsflüssigkeitsvolumen V (in cm³) mittels der Ordinaten der Koordinatensysteme der Fig. 1b und 1e angezeigt ist. Auch bei den Koordinatensystemen der Fig. 1c und 1f geben die Abszissen den Eingangsstangenweg xᵢₙₚᵤₜ (in Millimeter) der jeweiligen Eingangsstange an, während die Ordinaten der Koordinatensysteme der Fig. 1c und 1f einen Ausgangsstangenweg xₒᵤₜₚᵤₜ (in Millimeter) einer zusammenwirkenden Ausgangsstange des jeweiligen hydraulischen Bremssystems anzeigen.

Ein Verhältnis p_{S} zwischen dem getätigten Eingangsstangenweg xᵢₙₚᵤₜ und dem damit bewirkten Hauptbremszylinderdruck p_{tmc} des herkömmlichen Schwimm-Bremssattel-Radbremszylinders (Fig. 1a) und ein Verhältnis p_{LD} zwischen dem getätigten Eingangsstangenweg xᵢₙₚᵤₜ und dem damit bewirkten Hauptbremszylinderdruck p_{tmc} des herkömmlichen Low-Drag-Radbremszylinders (Fig. 1d) weichen voneinander ab, so dass ein Fahrer zum Bewirken eines bestimmten

Hauptbremszylinderdrucks p_{tmc} bei dem herkömmlichen Low-Drag-Radbremszylinder einen längeren Bremshub an seinem Bremspedal betätigen muss, wie anhand eines Pfeils 2 dargestellt ist. Im Vergleich mit dem Schwimm-Bremssattel-Radbremszylinder weist der Low-Drag-Radbremszylinder eine längere Ansprechzeit bei einem Verlangsamen/Abbremsen eines damit ausgestatteten Fahrzeugs/Kraftfahrzeugs auf.

Beim Vergleichen der Fig. 1b und 1e fällt auch auf, dass ein Verhältnis Vs zwischen dem Bremsdruck in dem Schwimm-Bremssattel-Radbremszylinder und dem dazu einzufüllenden Bremsflüssigkeitsvolumen V (Fig. 1b) und ein Verhältnis V_{LD} zwischen dem Bremsdruck in dem Low-Drag-Radbremszylinder und dem dazu einzufüllenden Bremsflüssigkeitsvolumen V (Fig. 1e) voneinander abweichen. In dem Koordinatensystem der Fig. 1e ist auch ein zum Bewirken eines bestimmten Bremsdrucks (im Vergleich mit dem Schwimm-Bremssattel-Radbremszylinder) zusätzlich in dem Low-Drag-Radbremszylinder einzubringendes Zusatzvolumen 4 dargestellt. Ein Schließen des größeren Lüftspalts des Low-Drag-Radbremszylinders erfordert somit mehr Bremsvolumen.

In die Koordinatensysteme der Fig. 1c und 1d sind eine Pedalkennlinie ks des mit dem Schwimm-Bremssattel-Radbremszylinder ausgestatteten hydraulischen Bremssystems und eine Pedalkennlinie k_{LD} des mit dem Low-Drag-Radbremszylinder ausgestatteten hydraulischen Bremssystems eingezeichnet. Erkennbar ist, dass die Pedalwegkennlinien ks und k_{LD} einander entsprechen

DE 10 2012 203 698 A1 offenbart ein Verfahren zum Betreiben eines Bremskraftverstärkers eines Fahrzeugs und eine Steuervorrichtung für einen Bremskraftverstärker eines Fahrzeugs, wodurch das Ansteuern des Bremskraftverstärkers mittels des Ansteuersignals, welches unter Berücksichtigung des bei Beachtung der Verstellgeschwindigkeit der Eingangsstange festgelegten Soll-Verstellgeschwindigkeitssignals vorgebbar ist, gewährleistet wird, dass bei einer schnellen Bremsanforderung des Fahrers rasch reagiert werden kann.

Um eine verlängerte Ansprechzeit einer herkömmlichen hydraulischen Fahrzeugbremsanlage mit Low-Drag-Radbremszylindern und ein verlangsamtes Abbremsen eines damit ausgestatteten Fahrzeugs zu vermeiden, schlägt die DE 10 2008 054 856 A1 ein Verfahren vor, bei welchem ein Bremskraftverstärker bereits auf einen möglichen Bremswunsch hin so betätigt wird, dass ein Lüftspiel in den Low-Drag-Radbremszylindern verkleinert, vorzugsweise eliminiert, wird. Der mögliche Bremswunsch soll beispielsweise anhand einer (schnellen) Rücknahme eines Gaspedals, einer (schnellen) Annäherung eines Fahrerfußes an ein Bremspedal oder einer Unterschreitung eines Mindestabstands zu einem vorausfahrenden Fahrzeug oder einem Hindernis erkennbar sein.

### Offenbarung der Erfindung

Die Erfindung schafft eine Steuervorrichtung für einen elektromechanischen Bremskraftverstärker eines Fahrzeugs mit den Merkmalen des Anspruchs 1, einen elektromechanischen Bremskraftverstärker für ein Fahrzeug mit den Merkmalen des Anspruchs 4, ein hydraulisches Bremssystem für ein Fahrzeug mit den Merkmalen des Anspruchs 5 und ein Verfahren zum Betreiben eines elektromechanischen Bremskraftverstärkers eines Fahrzeugs mit den Merkmalen des Anspruchs 8.

### Vorteile der Erfindung

Die vorliegende Erfindung ermöglicht einen Betrieb eines elektromechanischen Bremskraftverstärkers in einem mit Low-Drag-Radbremszylindern ausgebildeten hydraulischen Bremssystems derart, dass bei einem Verlangsamen/Abbremsen eines damit ausgebildeten Fahrzeugs/Kraftfahrzeugs eine Ansprechzeit der Low-Drag-Radbremszylinder (im Wesentlichen) gleich einer Ansprechzeit von konventionellen Schwimm-Bremssattel-Radbremszylindern ist. Der erfindungsgemäße Betrieb des elektromechanischen Bremskraftverstärkers bewirkt eine Kompensation der Lüftspalte der Low-Drag-Radbremszylinder und gleichzeitig ein Bremsbetätigungsgefühl/Bremspedalgefühl, welches einem Fahrer gleich einem herkömmlichem Bremsbetätigungsgefühl/Bremspedalgefühl einer herkömmlichen Bremsanlage mit konventionellen Schwimm-Bremssattel-Radbremszylindern erscheint. Die vorliegende Erfindung bewirkt somit eine größere Akzeptanz von Low-Drag-Radbremszylindern bei Fahrern, wodurch diese zur Verwendung dieses kraftstoffsparenden und emissionsreduzierenden Radbremszylindertyps angeregt werden. Die vorliegende Erfindung trägt somit auch zur Reduzierung eines Kraftstoffverbrauchs und/oder einer Schadstoffemission beim Fahren bei.

Ein wesentlicher Vorteil der vorliegenden Erfindung gemäß dem oben erläuterten Stand der Technik besteht darin, dass die damit realisierbare Lüftspielkompensation keine Erfassung eines möglichen Bremswunsches und kein Reagieren des eingesetzten elektromechanischen Bremskraftverstärkers schon auf den möglichen Bremswunsch und vor einem Beginn einer tatsächlich angeforderten Bremsung erfordert. Damit kann bei einer Verwendung der vorliegenden Erfindung auf die Ausstattung des jeweiligen Fahrzeugs/Kraftfahrzeugs mit einer Sensorik zum Ermitteln von möglichen Bremswünschen verzichtet werden. Ebenso kann mittels der vorliegenden Erfindung (aufgrund von entfallenden Einsätzen des elektromechanischen Bremskraftverstärkers bereits auf einen möglichen Bremswunsch hin) ein Energieverbrauch reduziert werden.

Ein weiterer wesentlicher Vorteil der vorliegenden Erfindung liegt darin, dass die Lüftspielkompensation erfindungsgemäß ausführbar ist, bevor der Kraftschluss zwischen dem Ausgangskolben und dem Eingangskolben vorliegt. Der das Bremspedal betätigende Fahrer spürt somit die Lüftspielkompensation nicht. Die Lüftspielkompensation ist damit vereinbar mit einem herkömmlichen/standardgemäßen Bremsbetätigungsgefühl/Bremspedalgefühl des Fahrers beim Anfordern eines Verlangsamens/Abbremsens seines Fahrzeugs/Kraftfahrzeugs.

In einer vorteilhaften Ausführungsform der Steuervorrichtung ist die Elektronikeinrichtung zusätzlich dazu ausgelegt, die Maximalgeschwindigkeit zumindest unter Berücksichtigung eines bereitgestellten Fahrzeuggeschwindigkeitssignals bezüglich einer aktuellen Geschwindigkeit des Fahrzeugs festzulegen. Vorzugsweise wird in diesem Fall ein Zeitintervall zum Ausführen der Lüftspielkompensation mittels der Steigerung der Geschwindigkeit des verstellten Ausgangskolbens ausgehend von der Referenzgeschwindigkeit auf die Maximalgeschwindigkeit und der anschließenden Reduzierung der Geschwindigkeit von der Maximalgeschwindigkeit auf die Referenzgeschwindigkeit umso kürzer festgelegt, je höher die aktuelle Geschwindigkeit des Fahrzeugs ist. Damit kann bei einer vergleichsweise schnellen Fahrt des Fahrzeugs die Lüftspielkompensation auch schneller ausgeführt werden.

Als Alternative oder als Ergänzung dazu kann die Elektronikeinrichtung zusätzlich dazu ausgelegt sein, die Maximalgeschwindigkeit zumindest unter Berücksichtigung eines Bremsdynamiksignals bezüglich einer Dynamik der Betätigung des Bremspedals durch den Fahrer festzulegen. Das Zeitintervall zum Ausführen der Lüftspielkompensation kann in diesem Fall umso kürzer festgelegt werden, je höher die Dynamik der Betätigung des Bremspedals durch den Fahrer ist. Damit kann auch auf eine hohe Dynamik der Betätigung des Bremspedals, wie beispielsweise einer relativ schnellen Betätigung des Bremspedals, die Lüftspielkompensation relativ schnell erfolgen.

Die vorausgehend beschriebenen Vorteile sind auch bei einem elektromechanischen Bremskraftverstärker für ein Fahrzeug gewährleistet, welcher einem Hauptbremszylinder eines hydraulischen Bremssystems vorlagerbar oder vorgelagert ist und mit einer entsprechenden Steuervorrichtung ausgestattet ist. Der elektromechanische Bremskraftverstärker ist gemäß den oben beschriebenen Ausführungsformen der Steuervorrichtung weiterbildbar.

Auch ein hydraulisches Bremssystem für ein Fahrzeug mit einer derartigen Steuervorrichtung und einem zusammenwirkenden elektromechanischen Bremskraftverstärker oder dem oben beschriebenen elektromechanischen Bremskraftverstärker, wobei der jeweilige elektromechanische Bremskraftverstärker einem Hauptbremszylinder des hydraulischen Bremssystems vorgelagert ist, bewirkt die oben beschriebenen Vorteile. Auch das hydraulische Bremssystem ist gemäß den oben erläuterten Ausführungsformen der Steuervorrichtung weiterbildbar.

Insbesondere kann das hydraulische Bremssystem vier Radbremszylinder umfassen, wobei ein Zeitintervall, innerhalb welchem die Geschwindigkeit des um weniger als den Grenz-Verstellweg aus seiner Ausgangsstellung verstellten Ausgangskolbens zuerst ausgehend von der Referenzgeschwindigkeit auf die Maximalgeschwindigkeit gesteigert und danach von der Maximalgeschwindigkeit auf die Referenzgeschwindigkeit reduziert wird, so festgelegt ist, dass ein mittels der ausgeführten Erhöhung der Geschwindigkeit über die Referenzgeschwindigkeit zusätzlich aus dem Hauptbremszylinder in die Radbremszylinder verschobenes Bremsflüssigkeitsvolumen ausreichend zum Schließen der Lüftspiele der vier Radbremszylinder ist. Das hier beschriebene Bremssystem ist somit bezüglich der erfindungsgemäßen Lüftspielkompensation optimiert.

Vorzugsweise sind die vier Radbremszylinder jeweils mit einem widerstandsreduzierten Bremssattel oder einem Low-Drag-Bremssattel ausgebildet. Damit kann genutzt werden, dass der erfindungsgemäße Betrieb des elektromechanischen Bremskraftverstärkers speziell für diesen Radbremszylindertyp optimiert ist.

Des Weiteren schafft auch ein korrespondierendes Verfahren zum Betreiben eines elektromechanischen Bremskraftverstärkers eines Fahrzeugs die oben schon beschriebenen Vorteile. Es wird ausdrücklich darauf hingewiesen, dass auch das Verfahren gemäß den oben beschriebenen Ausführungsformen der Steuervorrichtung, des elektromechanischen Bremskraftverstärkers und/oder des hydraulischen Bremssystems weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1f: Koordinatensysteme zum Erläutern von Ansprechzeiten herkömmlicher Radbremszylinder, wobei mittels der Koordinatensysteme der Fig. 1a bis 1c ein standardgemäßer Schwimm-Bremssattel-Radbremszylinder und mittels der Koordinatensysteme der Fig. 1d bis 1f ein standardgemäßer Low-Drag-Radbremszylinder wiedergegeben sind;
- Fig. 2a und 2b: eine schematische Darstellung einer ersten Ausführungsform der Steuervorrichtung und ein Koordinatensystem zum Erläutern von deren Funktionsweise;
- Fig. 3: ein Koordinatensystem zum Erläutern einer Funktionsweise einer zweiten Ausführungsform der Steuervorrichtung; und
- Fig. 4a bis 4c: Koordinatensysteme zum Erläutern einer Ausführungsform des Verfahrens zum Betreiben eines elektromechanischen Bremskraftverstärkers eines Fahrzeugs.

### Ausführungsformen der Erfindung

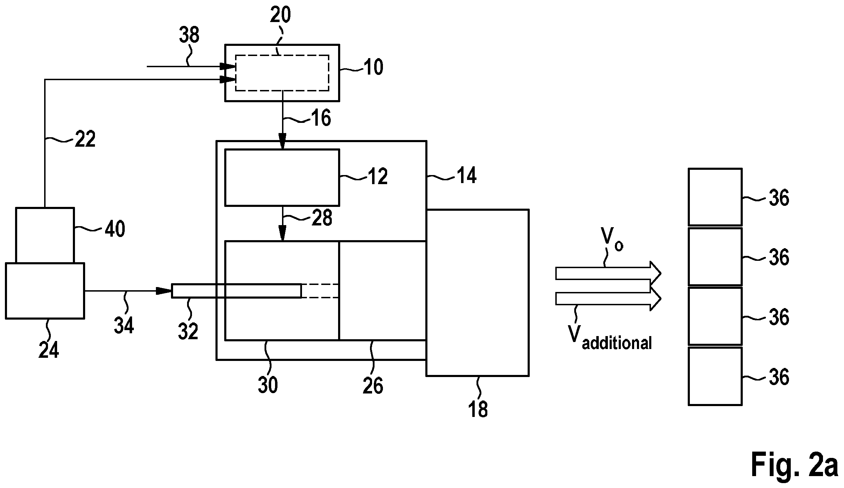

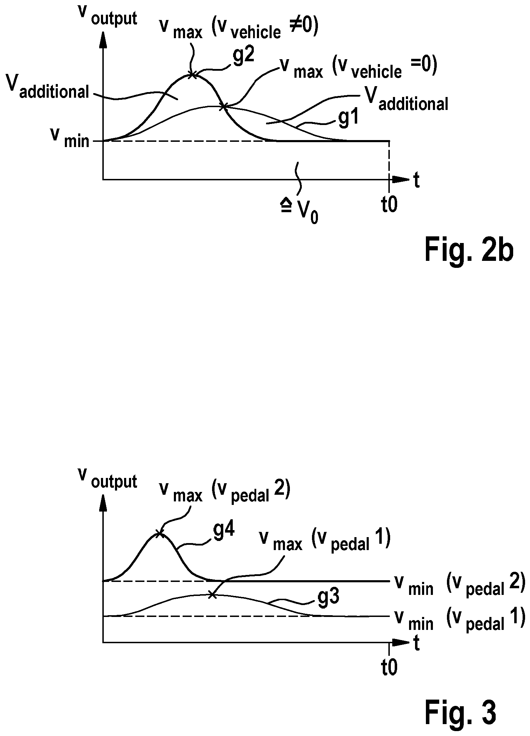

Fig. 2a und 2b zeigen eine schematische Darstellung einer ersten Ausführungsform der Steuervorrichtung und ein Koordinatensystem zum Erläutern von deren Funktionsweise.

Die in Fig. 2a schematisch dargestellte Steuervorrichtung 10 ist dazu ausgelegt, einen elektrischen Motor 12 eines elektromechanischen Bremskraftverstärkers 14 eines Fahrzeugs/Kraftfahrzeugs mittels mindestens eines Steuersignals 16 anzusteuern. Unter dem elektromechanischen Bremskraftverstärker 14 ist ein einem Hauptbremszylinder 18 eines hydraulischen Bremssystems des jeweiligen Fahrzeugs/Kraftfahrzeugs vorgelagerter oder vorlagerbarer Bremskraftverstärkertyp zu verstehen. Die Steuervorrichtung 10 kann als eigenes Bauteil (d.h. getrennt von dem elektromechanischen Bremskraftverstärker 14) ausgebildet sein. Alternativ kann unter der Steuervorrichtung 10 eine Untereinheit des elektromechanischen Bremskraftverstärkers 14 verstanden werden. Eine Verwendbarkeit der Steuervorrichtung 10, bzw. des damit ausgebildeten elektromechanischen Bremskraftverstärkers 14, ist weder auf einen bestimmten Bremssystemtyp des hydraulischen Bremssystems oder auf einen speziellen Fahrzeugtyp/Kraftfahrzeugtyp des Fahrzeugs/Kraftfahrzeugs limitiert.

Die Steuervorrichtung 10 hat eine Elektronikeinrichtung 20, welche dazu ausgelegt ist, den elektrischen Motor 12 des elektromechanischen Bremskraftverstärkers 14 unter Berücksichtigung zumindest eines bereitgestellten Bremsvorgabesignals 22 bezüglich einer Betätigung eines Bremspedals 24 des Fahrzeugs/Kraftfahrzeugs durch seinen Fahrer anzusteuern. Das Ansteuern des elektrischen Motors 12 unter Berücksichtigung zumindest des Bremsvorgabesignals 22 erfolgt derart, dass ein indirekt mit dem elektrischen Motor 12 verbundener Ausgangskolben 26 des elektromechanischen Bremskraftverstärkers 14 mittels des angesteuerten elektrischen Motors 12 aus seiner Ausgangsstellung verstellbar ist/verstellt wird. Beispielsweise übt der angesteuerte elektrische Motor 12 eine Motorkraft 28 derart auf einen Ventilkörper 30 (Valve Body) des elektromechanischen Bremskraftverstärkers 14 aus, dass der Ventilkörper 30 verstellt wird, wodurch der (kontaktierte/angestoßene) Ausgangskolben 26 mittels der Motorkraft 28 mitverstellt wird. Es wird jedoch darauf hingewiesen, dass eine Ausbildbarkeit des elektromechanischen Bremskraftverstärkers 14 nicht auf dessen Ausstattung mit dem Ventilkörper 30 limitiert ist.

Die Elektronikeinrichtung 20 ist dazu ausgelegt, den elektrischen Motor 12 derart anzusteuern, dass erst ab einem Verstellen des Ausgangskolbens 26 aus seiner Ausgangsstellung um zumindest einen vorgegebenen Grenz-Verstellweg ein Kraftschluss zwischen dem Ausgangskolben 26 und einem mit dem Bremspedal 24 indirekt verbundenen und mittels der Betätigung des Bremspedals 24 verstellten Eingangskolben 32 vorliegt. Der Eingangskolben 32 kann so indirekt an dem Bremspedal 24 angeordnet sein, dass eine Fahrerbremskraft 34 von dem Bremspedal 24 auf den Eingangskolben 32 übertragbar ist. Der besseren Anschaulichkeit wegen sind von dem elektromechanischen Bremskraftverstärker 14 nur die Komponenten 12, 26, 30 und 32 in Fig. 2a dargestellt. Es wird jedoch ausdrücklich darauf hingewiesen, dass der elektromechanische Bremskraftverstärker 14 auch alle anderen herkömmlichen Komponenten dieses Bremskraftverstärkertyps aufweisen kann.

Mittels eines Spalts/Leerwegs zwischen dem Eingangskolben 32 und dem Ausgangskolben 26 (bzw. einer dem Ausgangskolben 26 vorgelagerten Reaktionsscheibe) kann sichergestellt werden, dass bis zu einem Verstellen des Ausgangskolbens 26 aus seiner Ausgangsstellung um zumindest den Grenz-Verstellweg (bzw. bis zu einem Verstellen des Eingangskolbens 32 um einen entsprechenden Jump-In-Bereich) kein Kraftschluss zwischen dem Ausgangskolben 26 und dem Eingangskolben 32 vorliegt. Der das Bremspedal 24 betätigende Fahrer spürt somit bis zu einem Überschreiten des Jump-in-Bereichs/Grenz-Verstellwegs (trotz eines Kraftschlusses zwischen dem Ausgangskolben 26 und mindestens einen verstellbaren Kolben des Hauptbremszylinders 18) einen in dem Hauptbremszylinder 18 vorliegenden Hauptbremszylinderdruck nicht.

Die Elektronikeinrichtung 20 ist außerdem dazu ausgelegt, den elektrischen Motor 12 während eines Verstellens des Ausgangskolbens 26 aus seiner Ausgangsstellung bis zu dem Grenz-Verstellweg derart anzusteuern, dass eine Geschwindigkeit vₒᵤₜₚᵤₜ des um weniger als den Grenz-Verstellweg aus seiner Ausgangsstellung verstellten Ausgangskolbens 26 zuerst ausgehend von einer mittels einer Pedalgeschwindigkeit des Bremspedals 24 vorgegebenen Referenzgeschwindigkeit vₘᵢₙ auf eine vorgegebene oder festgelegte Maximalgeschwindigkeit vₘₐₓ gesteigert und danach (noch während des gleichen Verstellens des Ausgangskolbens 26 aus seiner Ausgangsstellung bis zu dem Grenz-Verstellweg) von der Maximalgeschwindigkeit vₘₐₓ auf die Referenzgeschwindigkeit vₘᵢₙ reduziert ist/wird. Dies ist mittels des Koordinatensystems der Fig. 2b schematisch wiedergegeben, wobei eine Abszisse des Koordinatensystems eine Zeitachse t ist und eine Ordinate des Koordinatensystems die Geschwindigkeit vₒᵤₜₚᵤₜ des Ausgangskolbens 26 angibt. Erkennbar ist, dass mittels der kurzzeitigen Steigerung der Geschwindigkeit vₒᵤₜₚᵤₜ des Ausgangskolbens 26 über die Referenzgeschwindigkeit vₘᵢₙ ein zusätzliches Bremsflüssigkeitsvolumen V_{additional} (zusätzlich zu einem mittels eines Einhaltens der Referenzgeschwindigkeit vₘᵢₙ verschobenen Grund-Bremsflüssigkeitsvolumen V₀) in Radbremszylinder 36 des hydraulischen Bremssystems verschoben wird. (Das Grund-Bremsflüssigkeitsvolumen V₀ entspricht einer Fläche unter der Linie vₘᵢₙ bis zu einer Zeit t0, ab welcher ein Kraftschluss zwischen dem Ausgangskolben 26 und dem Eingangskolben 32 vorliegt. Das zusätzliche Bremsflüssigkeitsvolumen V_{additional} entspricht einer zwischen der Linie vₘᵢₙ und dem Graphen g1 eingeschlossenen Fläche, bzw. einer zwischen der Linie vₘᵢₙ und dem Graphen g2 eingeschlossenen Fläche.)

Das zusätzliche Bremsflüssigkeitsvolumen V_{additional} ermöglicht eine mittels des elektromechanischen Bremskraftverstärkers 14 (automatisch) bewirkte Lüftspielkompensation in den Radbremszylindern 36. Der hier beschriebene Betrieb des elektromechanischen Bremskraftverstärkers 14 berücksichtigt damit von vornherein ein Lüftspiel der Radbremszylinder 36 und kompensiert dieses automatisch. Dabei bewegt der elektrische Motor 12 den Ausgangskolben 26 schon zu Beginn einer Bremsung mit einer schnelleren überlagerten Bewegung. Diese schnellere überlagerte Bewegung findet innerhalb des Jump-in-Bereichs statt, d.h. bevor der von dem Fahrer betätigte Eingangskolben 32 im Kraftschluss mit dem Ausgangskolben 26 vorliegt. Für den Fahrer ist deshalb die Lüftspielkompensation während der Betätigung des Bremspedals 24 nicht wahrnehmbar.

Noch vor dem Kraftschluss zwischen dem Eingangskolben 32 und dem Ausgangskolben 26 geht die Geschwindigkeit vₒᵤₜₚᵤₜ des Ausgangskolbens 26 in die Referenzgeschwindigkeit vₘᵢₙ über. Ab einem Vorliegen des Kraftschlusses zwischen dem Eingangskolben 32 und dem Ausgangskolben 26 verhält sich der elektromechanische Bremskraftverstärker 14 somit standardgemäß.

Vorzugsweise ist die Referenzgeschwindigkeit vₘᵢₙ gemäß einer vorgegebenen Relation/Funktion von der Pedalgeschwindigkeit des Bremspedals 24 (bzw. von einer Geschwindigkeit des Eingangskolbens 32) festgelegt/vorgegeben. Die Referenzgeschwindigkeit vₘᵢₙ kann beispielsweise von der Steuervorrichtung 10 unter Berücksichtigung des bereitgestellten Bremsvorgabesignals 22 festgelegt sein/werden.

In der Ausführungsform der Fig. 2a und 2b ist die Elektronikeinrichtung 20 zusätzlich dazu ausgelegt, die Maximalgeschwindigkeit vₘₐₓ zumindest unter Berücksichtigung eines bereitgestellten Fahrzeuggeschwindigkeitssignals 38 bezüglich einer aktuellen Geschwindigkeit v_{vehicle} des Fahrzeugs festzulegen. Die Ansteuerung des elektrischen Motors 12 erfolgt somit situationsbedingt. Vorzugsweise wird dabei die Maximalgeschwindigkeit vₘₐₓ umso höher gewählt, je schneller das Fahrzeug fährt.

In dem Beispiel der Fig. 2a und 2b gibt der Graph g1 die Geschwindigkeit vₒᵤₜₚᵤₜ bei einem Fahrzeugstillstand wieder (v_{vehicle}=0). Demgegenüber ist mittels des Graphen g2 die Geschwindigkeit vₒᵤₜₚᵤₜ bei einer Fahrt des Fahrzeugs/Kraftfahrzeugs (v_{vehicle}≠0) wiedergegeben. Die Lüftspielkompensation wird damit bei einem Fahrzeugstillstand weniger dynamisch durchgeführt als während einer Fahrt des Fahrzeugs/Kraftfahrzeugs. Dies ist vorteilhaft, da bei einem Fahrzeugstillstand die "Bremswirkung" dem Fahrer weniger wichtig ist als ein gutes Pedalgefühl, während die auf das fahrende Fahrzeug/Kraftfahrzeug bewirkte Bremswirkung dem Fahrer in der Regel wichtiger ist als ein gutes Pedalgefühl.

Das Bremsvorgabesignal 22 kann mittels einer Sensierung einer Position des Eingangskolbens 32 und/oder einer Sensierung einer Geschwindigkeit des Eingangskolbens 32 bereitgestellt werden. Zur Sensierung einer Position des Eingangskolbens 32 und/oder der Geschwindigkeit des Eingangskolbens 32 kann mindestens ein Sensor 40, wie beispielsweise ein Pedalsensor, ein Pedalwinkelsensor, ein Pedalgeschwindigkeitssensor, ein Pedalwinkelgeschwindigkeitssensor, ein Stangenwegsensor, ein Differenzwegsensor, ein Kraftmesssensor und/oder ein Motorpositionssensor, eingesetzt werden. Somit können an einem Fahrzeug/Kraftfahrzeug in der Regel bereits verbaute Sensortypen zur Bereitstellung des Bremsvorgabesignals 22 eingesetzt werden.

Fig. 3 zeigt ein Koordinatensystem zum Erläutern einer Funktionsweise einer zweiten Ausführungsform der Steuervorrichtung. In dem Koordinatensystems der Fig. 3 ist eine Abszisse die Zeitachse t, während eine Ordinate die Geschwindigkeit vₒᵤₜₚᵤₜ des Ausgangskolbens 26 angibt.

Als Weiterbildung oder als Alternative zu der zuvor beschriebenen Ausführungsform ist die mittels des Koordinatensystems der Fig. 3 wiedergegebene Steuervorrichtung dazu ausgelegt, die Maximalgeschwindigkeit vₘₐₓ zumindest unter Berücksichtigung eines Bremsdynamiksignals bezüglich einer Dynamik der Betätigung des Bremspedals durch den Fahrer festzulegen. Zur Bereitstellung des Bremsdynamiksignals kann auch der mindestens eine Sensor zur Sensierung einer Position des Eingangskolbens und/oder der Geschwindigkeit des Eingangskolbens, wie beispielsweise ein Pedalsensor, ein Pedalwinkelsensor, ein Pedalgeschwindigkeitssensor, ein Pedalwinkelgeschwindigkeitssensor, ein Stangenwegsensor, ein Differenzwegsensor, ein Kraftmesssensor und/oder ein Motorpositionssensor, genutzt werden. Vorzugsweise wird die Lüftspielkompensation bei hochdynamischen Betätigungen des Bremspedals schneller durchgeführt als bei weniger dynamischen Betätigungen des Bremspedals. Dies ist vorteilhaft, da eine hochdynamische Betätigung des Bremspedals anzeigt, dass der Fahrer sein Fahrzeug möglichst schnell abbremsen will, auch wenn er dabei ein ungewohntes Pedalgefühl hat. Optionaler Weise kann auch die Referenzgeschwindigkeit vₘᵢₙ unter Berücksichtigung des Bremsdynamiksignals festgelegt sein.

Bei dem Beispiel der Fig. 3 mit den Graphen g3 und g4 sind die Maximalgeschwindigkeit vₘₐₓ und die Referenzgeschwindigkeit vₘᵢₙ unter Berücksichtigung einer Eintrittsgeschwindigkeit v_{pedal} des Fahrers am Bremspedal (als einer die Dynamik der Betätigung des Bremspedals wiedergebenden Größe des Bremsdynamiksignals) festgelegt. Je höher die Eintrittsgeschwindigkeit v_{pedal}, desto höher sind ist Maximalgeschwindigkeit vₘₐₓ (und optionaler Weise auch die Referenzgeschwindigkeit vₘᵢₙ). (Die Eintrittsgeschwindigkeit v_{pedal}2 ist größer als die Eintrittsgeschwindigkeit v_{pedal}1). Die Festlegung der Maximalgeschwindigkeit vₘₐₓ (und optionaler Weise auch der Referenzgeschwindigkeit vₘᵢₙ) unter Berücksichtigung der Eintrittsgeschwindigkeit v_{pedal} gewährleistet eine optimale Kompensation des Lüftspiels während des Fahrbetriebs und ein gewohnheitsmäßiges/standardgemäßes Pedalgefühl.

Die Vorteile der oben erläuterten Steuervorrichtungen weist auch ein elektromechanischer Bremskraftverstärker für ein Fahrzeug, welcher einem Hauptbremszylinder eines hydraulischen Bremssystems vorlagerbar oder vorgelagert ist und mit einer derartigen Steuervorrichtung ausgebildet ist, auf. Ebenso bewirkt auch ein hydraulisches Bremssystem für ein Fahrzeug mit einer entsprechenden Steuervorrichtung und einem zusammenwirkenden elektromechanischen Bremskraftverstärker oder mit einem (mit einer derartigen Steuervorrichtung ausgebildeten) elektromechanischen Bremskraftverstärker, wobei der jeweilige elektromechanische Bremskraftverstärker einem Hauptbremszylinder des hydraulischen Bremssystems vorgelagert ist, die oben erläuterten Vorteile. Vorzugsweise umfasst das hydraulische Bremssystem vier Radbremszylinder, wobei ein Zeitintervall, innerhalb welchem die Geschwindigkeit des um weniger als den Grenz-Verstellweg aus seiner Ausgangsstellung verstellten Ausgangskolbens zuerst ausgehend von der Referenzgeschwindigkeit auf die Maximalgeschwindigkeit gesteigert und danach von der Maximalgeschwindigkeit auf die Referenzgeschwindigkeit reduziert wird, so festgelegt ist, dass ein mittels der ausgeführten Erhöhung der Geschwindigkeit über die Referenzgeschwindigkeit zusätzlich aus dem Hauptbremszylinder in die Radbremszylinder verschobenes Bremsflüssigkeitsvolumen ausreichend zum Schließen der Lüftspiele der vier Radbremszylinder ist. Bevorzugter Weise sind in diesem Fall die vier Radbremszylinder jeweils mit einem widerstandsreduzierten Bremssattel oder einem Low-Drag-Bremssattel ausgebildet.

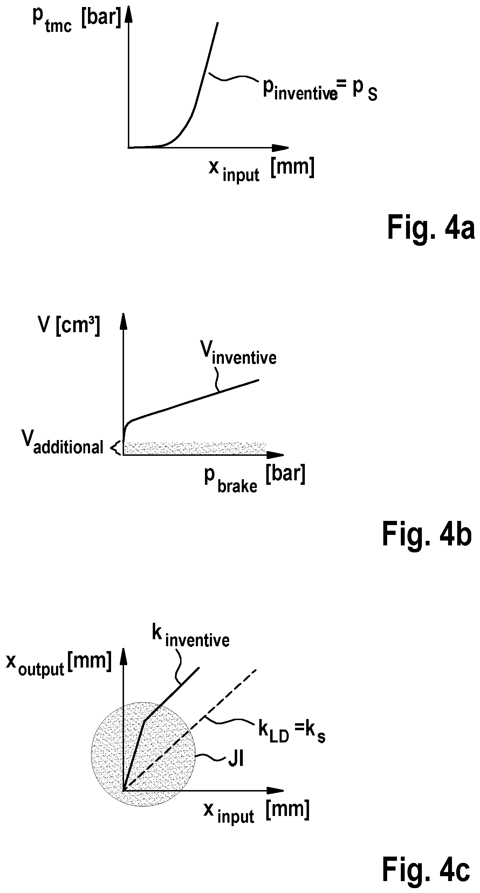

Fig. 4a bis 4c zeigen Koordinatensysteme zum Erläutern einer Ausführungsform des Verfahrens zum Betreiben eines elektromechanischen Bremskraftverstärkers eines Fahrzeugs.

Bei dem Koordinatensystem der Fig. 4a zeigt die Abszisse einen Eingangsstangenweg xᵢₙₚᵤₜ (in Millimeter) einer Eingangsstange des elektromechanischen Bremskraftverstärkers, während die Ordinate einen Hauptbremszylinderdruck t_{tmc} (in Bar) in einem dem elektromechanischen Bremskraftverstärker nachgeordneten Hauptbremszylinder wiedergibt. Die Abszisse des Koordinatensystems der Fig. 4b zeigt einen Bremsdruck (in Bar) in den Radbremszylindern eines mit dem elektromechanischen Bremskraftverstärker zusammenwirkenden hydraulischen an, wobei das dazu aus dem Hauptbremszylinder in die Radbremszylinder zu verschiebende Bremsflüssigkeitsvolumen V (in cm³) mittels der Ordinaten der Koordinatensysteme der Fig. 4b angezeigt ist. Auch bei dem Koordinatensystem der Fig. 4c gibt die Abszisse den Eingangsstangenweg xᵢₙₚᵤₜ (in Millimeter) an, während die Ordinate einen Ausgangsstangenweg xₒᵤₜₚᵤₜ (in Millimeter) einer Ausgangsstange des elektromechanischen Bremskraftverstärkers anzeigt.

Zu Beginn des Verfahrens wird eine Betätigung eines Bremspedals des Fahrzeugs/Kraftfahrzeugs durch seinen Fahrer erkannt. Sofort wird ein elektrischer Motor des elektromechanischen Bremskraftverstärkers unter Berücksichtigung zumindest der erkannten Betätigung des Bremspedals derart angesteuert, dass der indirekt mit dem elektrischen Motor verbundene Ausgangskolben mittels des angesteuerten elektrischen Motors aus seiner Ausgangsstellung verstellt wird. Der elektrische Motor wird dazu angesteuert, den Ausgangskolben so zu verstellen, dass erst ab einem Verstellen des Ausgangskolbens aus seiner Ausgangsstellung um zumindest einen vorgegebenen Grenz-Verstellweg (bzw. bis zu einem Verstellen des mit dem Bremspedal indirekt verbundenen und mittels der Betätigung des Bremspedals verstellten Eingangskolbens um einen entsprechenden Jump-In-Bereich Δ) ein Kraftschluss zwischen dem Ausgangskolben und dem Eingangskolben vorliegt. Außerdem wird der elektrische Motor dazu angesteuert, während des Verstellens des Ausgangskolbens aus seiner Ausgangstellung bis zu dem Grenz-Verstellweg eine Geschwindigkeit vₒᵤₜₚᵤₜ des Ausgangskolbens ausgehend von einer mittels einer Pedalgeschwindigkeit des Bremspedals (bzw. mittels einer Geschwindigkeit eines Stangenkolbens) vorgegebenen Referenzgeschwindigkeit auf eine vorgegebene oder festgelegte Maximalgeschwindigkeit zu steigern und noch während des Verstellens des Ausgangskolbens aus seiner Ausgangstellung bis zu dem Grenz-Verstellweg die Geschwindigkeit des Ausgangskolbens von der Maximalgeschwindigkeit auf die Referenzgeschwindigkeit zu reduzieren. Dies ist in Fig. 4c dargestellt, wobei zusätzlich zu der mittels des hier beschriebenen Verfahrens bewirkten Pedalkennlinie kᵢₙᵥₑₙₜᵢᵥₑ auch die Pedalwegkennlinien ks und k_{LD} des Stands der Technik in Fig. 4c eingezeichnet sind.

Mittels des hier beschriebenen Verfahrens erhält man ein Verhältnis pinventive zwischen dem getätigten Eingangsstangenweg xᵢₙₚᵤₜ und dem damit bewirkten Hauptbremszylinderdruck p_{tmc} gleich dem Verhältnis ps zwischen dem getätigten Eingangsstangenweg xᵢₙₚᵤₜ und dem damit bewirkten Hauptbremszylinderdruck p_{tmc} des herkömmlichen Schwimm-Bremssattel-Radbremszylinders. Außerdem wird bei einem Ausführen des hier beschriebenen Verfahrens ein Zeitintervall, innerhalb welchem die Geschwindigkeit des um weniger als den Grenz-Verstellweg aus seiner Ausgangsstellung verstellten Ausgangskolbens zuerst ausgehend von der Referenzgeschwindigkeit auf die Maximalgeschwindigkeit gesteigert und danach von der Maximalgeschwindigkeit auf die Referenzgeschwindigkeit reduziert wird, so eingehalten, dass mittels der ausgeführten Erhöhung der Geschwindigkeit über die Referenzgeschwindigkeit ein zum Schließen von Lüftspielen von allen vier Radbremszylindern des hydraulischen Bremssystems ausreichendes Bremsflüssigkeitsvolumen V_{additional} zusätzlich aus dem Hauptbremszylinder in die Radbremszylinder verschoben wird. Dies ist in Fig. 4b mit dem ein Verhältnis Vinventive zwischen dem Bremsdruck in dem Schwimm-Bremssattel-Radbremszylinder und dem dazu einzufüllenden Bremsflüssigkeitsvolumen V dargestellt. Das "zusätzliche Verschieben" des zum Schließen der Lüftspiele von allen vier Radbremszylindern ausreichenden Bremsflüssigkeitsvolumens V_{additional} erfolgt automatisch indem noch vor einer Überwindung des Jump-In-Bereichs JI der Ausgangskolben um einen gesteigerten Ausgangsstangenweg xₒᵤₜₚᵤₜ verstellt wird.

Es wird darauf hingewiesen, dass eine Ausführbarkeit des hier beschriebenen Verfahrens auf keinen bestimmten Bremssystemtyp des hydraulischen Bremssystems beschränkt ist. Das hier beschriebene Verfahren kann bei allen Fahrzeugtypen/Kraftfahrzeugtypen eingesetzt werden, wobei der Fahrer für alle Fahrzeugtypen/Kraftfahrzeugtypen ein schnelleres Ansprechen der Bremse bei gleichbleibender Betätigung empfindet. Insbesondere empfindet der Fahrer eines mit Low-Drag-Radbremszylindern ausgestatteten Fahrzeugs/Kraftfahrzeugs das gleiche Ansprechen seiner Bremse wie bei Verwendung von Standard-Bremssätteln.

Optionaler Weise kann die Maximalgeschwindigkeit zumindest unter Berücksichtigung einer aktuellen Geschwindigkeit des Fahrzeugs festgelegt werden. Ebenso kann die Maximalgeschwindigkeit zumindest unter Berücksichtigung einer Bremsdynamikgröße bezüglich einer Dynamik der Betätigung des Bremspedals durch den Fahrer festgelegt werden.

## Patentansprüche

1. Steuervorrichtung (10) für einen elektromechanischen Bremskraftverstärker (14) eines Fahrzeugs mit:
einer Elektronikeinrichtung (20), welche dazu ausgelegt ist, unter Berücksichtigung zumindest eines bereitgestellten Bremsvorgabesignals (22) bezüglich einer Betätigung eines Bremspedals (24) des Fahrzeugs durch seinen Fahrer einen elektrischen Motor (12) des elektromechanischen Bremskraftverstärkers (14) derart anzusteuern, dass ein indirekt mit dem elektrischen Motor (12) verbundener Ausgangskolben (26) des elektromechanischen Bremskraftverstärkers (14) mittels des angesteuerten elektrischen Motors (12) aus seiner Ausgangsstellung verstellbar ist;
wobei die Elektronikeinrichtung (20) zusätzlich dazu ausgelegt ist, den elektrischen Motor (12) derart anzusteuern, dass erst ab einem Verstellen des Ausgangskolbens (26) aus seiner Ausgangsstellung um zumindest einen vorgegebenen Grenz-Verstellweg ein Kraftschluss zwischen dem Ausgangskolben (26) und einem mit dem Bremspedal (24) indirekt verbundenen und mittels der Betätigung des Bremspedals (24) verstellten Eingangskolben (32) vorliegt,
**dadurch gekennzeichnet, dass**
die Elektronikeinrichtung (20) außerdem dazu ausgelegt ist, den elektrischen Motor (12) während des Verstellens des Ausgangskolbens (26) aus seiner Ausgangstellung bis zu dem Grenz-Verstellweg derart anzusteuern, dass eine Geschwindigkeit (vₒᵤₜₚᵤₜ) des um weniger als den Grenz-Verstellweg aus seiner Ausgangsstellung verstellten Ausgangskolbens (26) zuerst ausgehend von einer mittels einer Pedalgeschwindigkeit des Bremspedals vorgegebenen Referenzgeschwindigkeit (vₘᵢₙ) auf eine vorgegebene oder festgelegte Maximalgeschwindigkeit (vₘₐₓ) gesteigert und danach von der Maximalgeschwindigkeit (vₘₐₓ) auf die Referenzgeschwindigkeit (vₘᵢₙ) reduziert ist.

2. Steuervorrichtung (10) nach Anspruch 1, wobei die Elektronikeinrichtung (20) zusätzlich dazu ausgelegt ist, die Maximalgeschwindigkeit (vₘₐₓ) zumindest unter Berücksichtigung eines bereitgestellten Fahrzeuggeschwindigkeitssignals (38) bezüglich einer aktuellen Geschwindigkeit (v_{vehicle}) des Fahrzeugs festzulegen.

3. Steuervorrichtung (10) nach Anspruch 1 oder 2, wobei die Elektronikeinrichtung (20) zusätzlich dazu ausgelegt ist, die Maximalgeschwindigkeit (vₘₐₓ) zumindest unter Berücksichtigung eines Bremsdynamiksignals bezüglich einer Dynamik (v_{pedal}) der Betätigung des Bremspedals durch den Fahrer festzulegen.

4. Elektromechanischer Bremskraftverstärker (14) für ein Fahrzeug, welcher einem Hauptbremszylinder (18) eines hydraulischen Bremssystems vorlagerbar oder vorgelagert ist, mit einer Steuervorrichtung (10) nach einem der vorhergehenden Ansprüche.

5. Hydraulisches Bremssystem für ein Fahrzeug mit:
einer Steuervorrichtung (10) nach einem der Ansprüche 1 bis 3 mit einem zusammenwirkenden elektromechanischen Bremskraftverstärker (14) oder einem elektromechanischen Bremskraftverstärker (14) nach Anspruch 4, wobei der jeweilige elektromechanische Bremskraftverstärker (14) einem Hauptbremszylinder (18) des hydraulischen Bremssystems vorgelagert ist.

6. Hydraulisches Bremssystem nach Anspruch 5, welches vier Radbremszylinder (36) umfasst, wobei ein Zeitintervall, innerhalb welchem die Geschwindigkeit (vₒᵤₜₚᵤₜ) des um weniger als den Grenz-Verstellweg aus seiner Ausgangsstellung verstellten Ausgangskolbens (26) zuerst ausgehend von der Referenzgeschwindigkeit (vₘᵢₙ) auf die Maximalgeschwindigkeit (vₘₐₓ) gesteigert und danach von der Maximalgeschwindigkeit (vₘₐₓ) auf die Referenzgeschwindigkeit (vₘᵢₙ) reduziert wird, so festgelegt ist, dass ein mittels der ausgeführten Erhöhung der Geschwindigkeit (vₒᵤₜₚᵤₜ) über die Referenzgeschwindigkeit (vₘₐₓ) zusätzlich aus dem Hauptbremszylinder (18) in die Radbremszylinder (36) verschobenes Bremsflüssigkeitsvolumen (V_{additional}) ausreichend zum Schließen der Lüftspiele der vier Radbremszylinder (36) ist.

7. Hydraulisches Bremssystem nach Anspruch 6, wobei die vier Radbremszylinder (36) jeweils mit einem widerstandsreduzierten Bremssattel oder einem Low-Drag-Bremssattel ausgebildet sind.

8. Verfahren zum Betreiben eines elektromechanischen Bremskraftverstärkers (14) eines Fahrzeugs mit den Schritten:
Erkennen einer Betätigung eines Bremspedals (24) des Fahrzeugs durch seinen Fahrer; und
Ansteuern eines elektrischen Motors (12) des elektromechanischen Bremskraftverstärkers (14) unter Berücksichtigung zumindest der erkannten Betätigung des Bremspedals (24) derart, dass ein indirekt mit dem elektrischen Motor (12) verbundener Ausgangskolben (26) des elektromechanischen Bremskraftverstärkers (14) mittels des angesteuerten elektrischen Motors (12) aus seiner Ausgangsstellung verstellt wird;
wobei der elektrische Motor (12) dazu angesteuert wird, den Ausgangskolben (26) so zu verstellen, dass erst ab einem Verstellen des Ausgangskolbens (26) aus seiner Ausgangsstellung um zumindest einen vorgegebenen Grenz-Verstellweg ein Kraftschluss zwischen dem Ausgangskolben (26) und einem mit dem Bremspedal (24) indirekt verbundenen und mittels der Betätigung des Bremspedals (24) verstellten Eingangskolben (32) vorliegt,
**dadurch gekennzeichnet, dass**
der elektrische Motor (12) dazu angesteuert wird, während des Verstellens des Ausgangskolbens (26) aus seiner Ausgangstellung bis zu dem Grenz-Verstellweg eine Geschwindigkeit (vₒᵤₜₚᵤₜ) des Ausgangskolbens (26) ausgehend von einer mittels einer Pedalgeschwindigkeit des Bremspedals vorgegebenen Referenzgeschwindigkeit (vₘᵢₙ) auf eine vorgegebene oder festgelegte Maximalgeschwindigkeit (vₘₐₓ) zu steigern und noch während des Verstellens des Ausgangskolbens (26) aus seiner Ausgangstellung bis zu dem Grenz-Verstellweg die Geschwindigkeit (vₒᵤₜₚᵤₜ) des Ausgangskolbens (26) von der Maximalgeschwindigkeit (vₘₐₓ) auf die Referenzgeschwindigkeit (vₘᵢₙ) zu reduzieren.

9. Verfahren nach Anspruch 8, wobei die Maximalgeschwindigkeit (vₘₐₓ) zumindest unter Berücksichtigung einer aktuellen Geschwindigkeit (v_{vehicle}) des Fahrzeugs festgelegt wird.

10. Verfahren nach Anspruch 8 oder 9, wobei die Maximalgeschwindigkeit (vₘₐₓ) zumindest unter Berücksichtigung einer Bremsdynamikgröße (v_{pedal}) bezüglich einer Dynamik (v_{pedal}) der Betätigung des Bremspedals (24) durch den Fahrer festgelegt wird.

11. Verfahren nach einem der Ansprüche 8 bis 10, wobei der betriebene elektromechanische Bremskraftverstärker (14) einem Hauptbremszylinder (18) eines hydraulischen Bremssystems des Fahrzeugs vorgelagert ist, und ein Zeitintervall, innerhalb welchem die Geschwindigkeit (vₒᵤₜₚᵤₜ) des um weniger als den Grenz-Verstellweg aus seiner Ausgangsstellung verstellten Ausgangskolbens (26) zuerst ausgehend von der Referenzgeschwindigkeit (vₘᵢₙ) auf die Maximalgeschwindigkeit (vₘₐₓ) gesteigert und danach von der Maximalgeschwindigkeit (vₘₐₓ) auf die Referenzgeschwindigkeit (vₘᵢₙ) reduziert wird, so eingehalten wird, dass mittels der ausgeführten Erhöhung der Geschwindigkeit (vₒᵤₜₚᵤₜ) über die Referenzgeschwindigkeit (vₘᵢₙ) ein zum Schließen von Lüftspielen von allen vier Radbremszylindern (26) des hydraulischen Bremssystems ausreichendes Bremsflüssigkeitsvolumen (V_{additional}) zusätzlich aus dem Hauptbremszylinder (18) in die Radbremszylinder (36) verschoben wird.

## Claims

1. Control device (10) for an electromechanical brake booster (14) of a vehicle, having:
an electronics device (20) which is configured to, taking into consideration at least one provided braking specification signal (22) relating to an actuation of a brake pedal (24) of the vehicle by its driver, actuate an electric motor (12) of the electromechanical brake booster (14) such that an output piston (26), which is indirectly connected to the electric motor (12), of the electromechanical brake booster (14) is adjustable out of its initial position by means of the actuated electric motor (12);
wherein the electronics device (20) is additionally configured to actuate the electric motor (12) such that a force-transmitting connection exists between the output piston (26) and an input piston (32), which is indirectly connected to the brake pedal (24) and which has been adjusted by means of the actuation of the brake pedal (24), only once the output piston (26) has been adjusted out of its initial position by at least a predefined threshold adjustment travel,
**characterized in that**
the electronics device (20) is furthermore configured to actuate the electric motor (12), during the adjustment of the output piston (26) out of its initial position as far as the threshold adjustment travel, such that a speed (vₒᵤₜₚᵤₜ) of the output piston (26) which has been adjusted out of its initial position by less than the threshold adjustment travel is firstly increased from a reference speed (vₘᵢₙ), which is predefined by means of a pedal speed of the brake pedal, to a predefined or set maximum speed (vₘₐₓ), and is subsequently reduced from the maximum speed (vₘₐₓ) to the reference speed (vₘᵢₙ).

2. Control device (10) according to Claim 1, wherein the electronics device (20) is additionally configured to set the maximum speed (vₘₐₓ) at least taking into consideration a provided vehicle speed signal (38) relating to a present speed (v_{vehicle}) of the vehicle.

3. Control device (10) according to Claim 1 or 2, wherein the electronics device (20) is additionally configured to set the maximum speed (vₘₐₓ) at least taking into consideration a braking dynamics signal relating to dynamics (v_{pedal}) of the actuation of the brake pedal by the driver.

4. Electromechanical brake booster (14) for a vehicle, which can be or is connected upstream of a master brake cylinder (18) of a hydraulic brake system, having a control device (10) according to any of the preceding claims.

5. Hydraulic brake system for a vehicle, having:
a control device (10) according to any of Claims 1 to 3 with an interacting electromechanical brake booster (14) or an electromechanical brake booster (14) according to Claim 4, wherein the respective electromechanical brake booster (14) is connected upstream of a master brake cylinder (18) of the hydraulic brake system.

6. Hydraulic brake system according to Claim 5, which comprises four wheel brake cylinders (36), wherein a time interval, within which the speed (vₒᵤₜₚᵤₜ) of the output piston (26) which has been adjusted out of its initial position by less than the threshold adjustment travel is firstly increased from the reference speed (vₘᵢₙ) to the maximum speed (vₘₐₓ) and is subsequently reduced from the maximum speed (vₘₐₓ) to the reference speed (vₘᵢₙ), is set such that a brake fluid volume (V_{additional}) additionally displaced out of the master brake cylinder (18) into the wheel brake cylinders (36) by means of the implemented increase of the speed (vₒᵤₜₚᵤₜ) above the reference speed (vₘₐₓ) is sufficient to close the air gaps of the four wheel brake cylinders (36).

7. Hydraulic brake system according to Claim 6, wherein the four wheel brake cylinders (36) are each formed with a resistance-reducing brake calliper or a low-drag brake calliper.

8. Method for operating an electromechanical brake booster (14) of a vehicle, having the steps:
identifying an actuation of a brake pedal (24) of the vehicle by its driver; and
actuating an electric motor (12) of the electromechanical brake booster (14) taking into consideration at least the identified actuation of the brake pedal (24) such that an output piston (26), which is indirectly connected to the electric motor (12), of the electromechanical brake booster (14) is adjusted out of its initial position by means of the actuated electric motor (12);
wherein the electric motor (12) is actuated to adjust the output piston (26) such that a force-transmitting connection exists between the output piston (26) and an input piston (32), which is indirectly connected to the brake pedal (24) and which has been adjusted by means of the actuation of the brake pedal (24), only once the output piston (26) has been adjusted out of its initial position by at least a predefined threshold adjustment travel,
**characterized in that**
the electric motor (12) is actuated to, during the adjustment of the output piston (26) out of its initial position as far as the threshold adjustment travel, increase a speed (vₒᵤₜₚᵤₜ) of the output piston (26) from a reference speed (vₘᵢₙ), which is predefined by means of a pedal speed of the brake pedal, to a predefined or set maximum speed (vₘₐₓ) and, still during the adjustment of the output piston (26) from its initial position as far as the threshold adjustment travel, reduce the speed (vₒᵤₜₚᵤₜ) of the output piston (26) from the maximum speed (vₘₐₓ) to the reference speed (vₘᵢₙ).

9. Method according to Claim 8, wherein the maximum speed (vₘₐₓ) is set at least taking into consideration a present speed (v_{vehicle}) of the vehicle.

10. Method according to Claim 8 or 9, wherein the maximum speed (vₘₐₓ) is set at least taking into consideration a braking dynamics variable (v_{pedal}) relating to dynamics (v_{pedal}) of the actuation of the brake pedal (24) by the driver.

11. Method according to any of Claims 8 to 10, wherein the operated electromechanical brake booster (14) is connected upstream of a master brake cylinder (18) of a hydraulic brake system of the vehicle, and a time interval, within which the speed (vₒᵤₜₚᵤₜ) of the output piston (26) which has been adjusted out of its initial position by less than the threshold adjustment travel is firstly increased from the reference speed (vₘᵢₙ) to the maximum speed (vₘₐₓ) and is subsequently reduced from the maximum speed (vₘₐₓ) to the reference speed (vₘᵢₙ), is maintained such that a brake fluid volume (V_{additional}) sufficient to close air gaps of all four wheel brake cylinders (26) of the hydraulic brake system is additionally displaced out of the master brake cylinder (18) into the wheel brake cylinders (36) by means of the implemented increase of the speed (vₒᵤₜₚᵤₜ) above the reference speed (vₘᵢₙ).

## Revendications

1. Dispositif de commande (10) pour un servofrein électromécanique (14) d'un véhicule, comportant :
un dispositif électronique (20), lequel est conçu pour, en tenant compte d'au moins un signal de prescription de freinage fourni (22) se rapportant à un actionnement d'une pédale de frein (24) du véhicule par son conducteur, commander un moteur électrique (12) du servofrein électromécanique (14) de telle sorte qu'un piston de sortie (26), relié indirectement au moteur électrique (12), du servofrein électromécanique (14) peut être déplacé à partir de sa position de départ au moyen du moteur électrique commandé (12) ;
le dispositif électronique (20) étant en outre conçu pour commander le moteur électrique (12) de telle sorte qu'un engagement par force entre le piston de sortie (26) et un piston d'entrée (32) relié indirectement à la pédale de frein (24) et déplacé au moyen de l'actionnement de la pédale de frein (24) n'est présent qu'à partir d'un déplacement du piston de sortie (26) à partir de sa position de départ d'au moins une course de déplacement limite prédéfinie,
**caractérisé en ce que**
le dispositif électronique (20) est en outre conçu pour commander le moteur électrique (12) pendant le déplacement du piston de sortie (26) à partir de sa position de départ jusqu'à la course de déplacement limite de telle sorte qu'une vitesse (vₒᵤₜₚᵤₜ) du piston de sortie (26) déplacé à partir de sa position de départ de moins que la course de déplacement limite est tout d'abord augmentée d'une vitesse de référence (vₘᵢₙ) prédéfinie au moyen d'une vitesse de la pédale de frein à une vitesse maximale prédéfinie ou fixée (vₘₐₓ) puis est réduite de la vitesse maximale (vₘₐₓ) à la vitesse de référence (vₘᵢₙ).

2. Dispositif de commande (10) selon la revendication 1, le dispositif électronique (20) étant en outre conçu pour fixer la vitesse maximale (vₘₐₓ) au moins en tenant compte d'un signal de vitesse de véhicule fourni (38) se rapportant à une vitesse instantanée (v_{vehicle}) du véhicule.

3. Dispositif de commande (10) selon la revendication 1 ou 2, le dispositif électronique (20) étant en outre conçu pour fixer la vitesse maximale (vₘₐₓ) au moins en tenant compte d'un signal de dynamique de freinage se rapportant à une dynamique (v_{pedal}) de l'actionnement de la pédale de frein par le conducteur.

4. Servofrein électromécanique (14) pour un véhicule, lequel peut être placé ou est placé en amont d'un maître-cylindre de frein (18) d'un système de freinage hydraulique, comportant un dispositif de commande (10) selon l'une des revendications précédentes.

5. Système de freinage hydraulique pour un véhicule, comportant :
un dispositif de commande (10) selon l'une des revendications 1 à 3 comportant un servofrein électromécanique coopérant (14) ou un servofrein électromécanique (14) selon la revendication 4, le servofrein électromécanique respectif (14) étant placé en amont d'un maître-cylindre de frein (18) du système de freinage hydraulique.

6. Système de freinage hydraulique selon la revendication 5, lequel comporte quatre cylindres de frein de roue (36), un intervalle de temps pendant lequel la vitesse (vₒᵤₜₚᵤₜ) du piston de sortie (26) déplacé à partir de sa position de départ de moins que la course de déplacement limite est tout d'abord augmentée de la vitesse de référence (vₘᵢₙ) à la vitesse maximale (vₘₐₓ) puis est réduite de la vitesse maximale (vₘₐₓ) à la vitesse de référence (vₘᵢₙ) étant fixé de telle sorte qu'un volume de liquide de frein (v_{additional}) déplacé en plus hors du maître-cylindre de frein (18) dans les cylindres de frein de roue (36) au moyen de l'augmentation effectuée de la vitesse (vₒᵤₜₚᵤₜ) au-delà de la vitesse de référence (vₘₐₓ) est suffisant pour la fermeture des jeux des quatre cylindres de frein de roue (36).

7. Système de freinage hydraulique selon la revendication 6, les quatre cylindres de frein de roue (36) étant pourvus respectivement d'un étrier de frein à résistance réduite ou d'un étrier de frein à faible frottement (low drag).

8. Procédé permettant de faire fonctionner un servofrein électromécanique (14) d'un véhicule, comportant les étapes suivantes :
détection d'un actionnement d'une pédale de frein (24) du véhicule par son conducteur ; et
commande d'un moteur électrique (12) du servofrein électromécanique (14) en tenant compte au moins de l'actionnement détecté de la pédale de frein (24), de telle sorte qu'un piston de sortie (26), relié indirectement au moteur électrique (12), du servofrein électromécanique (14) est déplacé à partir de sa position de départ au moyen du moteur électrique commandé (12) ;
le moteur électrique (12) étant commandé pour déplacer le piston de sortie (26) de telle sorte qu'un engagement par force entre le piston de sortie (26) et un piston d'entrée (32) relié indirectement à la pédale de frein (24) et déplacé au moyen de l'actionnement de la pédale de frein (24) n'est présent qu'à partir d'un déplacement du piston de sortie (26) à partir de sa position de départ d'au moins une course de déplacement limite prédéfinie,
**caractérisé en ce que**
le moteur électrique (12) est commandé pour, pendant le déplacement du piston de sortie (26) à partir de sa position de départ jusqu'à la course de déplacement limite, augmenter une vitesse (vₒᵤₜₚᵤₜ) du piston de sortie (26) d'une vitesse de référence (vₘᵢₙ) prédéfinie au moyen d'une vitesse de la pédale de frein à une vitesse maximale prédéfinie ou fixée (vₘₐₓ) puis pour réduire la vitesse (vₒᵤₜₚᵤₜ) du piston de sortie (26) de la vitesse maximale (vₘₐₓ) à la vitesse de référence (vₘᵢₙ) encore pendant le déplacement du piston de sortie (26) à partir de sa position de départ jusqu'à la course de déplacement limite.

9. Procédé selon la revendication 8, la vitesse maximale (vₘₐₓ) étant fixée au moins en tenant compte d'une vitesse instantanée (v_{vehicle}) du véhicule.

10. Procédé selon la revendication 8 ou 9, la vitesse maximale (vₘₐₓ) étant fixée au moins en tenant compte d'une grandeur de dynamique de freinage (v_{pedal}) se rapportant à une dynamique (v_{pedal}) de l'actionnement de la pédale de frein (24) par le conducteur.

11. Procédé selon l'une des revendications 8 à 10, le servofrein électromécanique actionné (14) étant placé en amont d'un maître-cylindre de frein (18) d'un système de freinage hydraulique du véhicule, et un intervalle de temps pendant lequel la vitesse (vₒᵤₜₚᵤₜ) du piston de sortie (26) déplacé à partir de sa position de départ de moins que la course de déplacement limite est tout d'abord augmentée de la vitesse de référence (vₘᵢₙ) à la vitesse maximale (vₘₐₓ) puis est réduite de la vitesse maximale (vₘₐₓ) à la vitesse de référence (vₘᵢₙ) étant respecté de telle sorte qu'au moyen de l'augmentation effectuée de la vitesse (vₒᵤₜₚᵤₜ) au-delà de la vitesse de référence (vₘᵢₙ), un volume de liquide de frein (v_{additional}) suffisant pour la fermeture de jeux de tous les quatre cylindres de frein de roue (26) du système de freinage hydraulique est déplacé en plus hors du maître-cylindre de frein (18) dans les cylindres de frein de roue (36).
